# EUROPEAN PATENT SPECIFICATION

(11) **EP 3 040 630 B1**
(45) Date of publication and mention of the grant of the patent: **08.03.2023**
(21) Application number: 15203129.0
(22) Date of filing: 30.12.2015
(51) Int. Cl.: F24F 1/50, F24F 1/56

(54) **OUTDOOR DEVICE OF AN AIR CONDITIONER**
AUSSENVORRICHTUNG EINER KLIMAANLAGE
DISPOSITIF EXTÉRIEUR D'UN CLIMATISEUR

(30) Priority: 05.01.2015 KR 20150000843
(43) Date of publication of application: 06.07.2016
(73) Proprietor: LG Electronics Inc., Seoul 07336 (KR)
(72) Inventor: JEUNG, Jonghwan, 08592 Seoul (KR); LEE, Jaewan, 08592 Seoul (KR); KOO, Kyomin, 08592 Seoul (KR)
(74) Representative: Vossius & Partner Patentanwälte Rechtsanwälte mbB

(56) References cited:
- EP-A1- 2 787 290
- GB-A- 2 286 963
- US-A1- 2003 122 458
- US-A1- 2003 217 563
- US-A1- 2008 092 576

## Description

The present invention relates to an outdoor device of an air conditioner according to the preamble of claim 1. Such an outdoor device is known, for example, from US 2003/0217563 A1.

An outdoor device for an air conditioner and a method of manufacturing a side supporter for an outdoor device for an air conditioner are disclosed herein.

An air conditioner is a home appliance that maintains air in a room or indoor space in a most suitable condition according to an application and purpose. The air conditioner adjusts the room or indoor space to a cooling condition in summer and to a heating condition in winter, adjusts a humidity in the room or indoor space, and adjusts the air in the room or indoor space to be in a pleasant and clean condition. In the air conditioner, a refrigeration cycle for performing compression, condensation, expansion, and evaporation of a refrigerant is driven, and therefore a cooling or heating operation of the indoor space may be performed.

Such an air conditioner may be classified as a split type air conditioner, in which an indoor unit or device and an outdoor unit or device are separated from each other, and a window type air conditioner, in which the indoor device and the outdoor device are combined in one device according to whether the indoor device and the outdoor device are separated from each other. The outdoor device may include an outdoor heat exchanger that exchanges heat with outdoor air, and the indoor device may include an indoor heat exchanger that exchanges heat with indoor air.

When the refrigeration cycle performs the cooling operation, the outdoor heat exchanger may function as a condenser, and the indoor heat exchanger may function as an evaporator. On the other hand, when the refrigeration cycle performs the heating operation, the indoor heat exchanger may function as the condenser, and the outdoor heat exchanger may function as the evaporator.

In recent years, a multi-type air conditioner, in which a plurality of outdoor devices are disposed outdoors, such as on a rooftop of a building, and an indoor device that independently cools and heats each indoor space is connected to the outdoor device to constitute a refrigerant circuit has been widely used as the air conditioner.

In Korean Patent Publication No. 10-2013-0088434 a related art multi-type air conditioner is disclosed. In the outdoor device according to the related art multi-type air conditioner, individual components forming the refrigeration cycle, including a compressor, are mounted on an upper surface of a base pan, and the outdoor heat exchanger is disposed or provided along a periphery of the base pan to be exposed on three sides. Then, a left panel and a right panel, in which a suction port is formed, are provided on left and right sides corresponding to the heat exchanger, and a suction grill is formed on a rear surface of the heat exchanger to allow outdoor air to pass through the outdoor heat exchanger.

However, in such an outdoor device according to the prior art, the entire structure of the outdoor device is formed in a rectangular parallelepiped, and particularly, in a corner portion or corner of two sides of the rectangular parallelepiped, only a structure in which panels forming an appearance of the outdoor device are connected to each other is configured without a separate support structure, and therefore, a load strength of a product is poor, such that the corner portion may be damaged when a shock is applied to the corner portion the transport or installation of the outdoor device, for example. In addition, when the outdoor device passes through an elevator or a door upon installation and transport of the outdoor device, the corner portion may be caught in the elevator or the door, and the whole product should be carried or pushed to be transported in order to prevent the corner portion from being caught, resulting in a decrease in mobility of the outdoor device.

US 2003/0217563 A1 describes an air conditioner including an outdoor section comprising an outdoor coil, a fan, and a refrigerant compressor housed within the cabinet.

US 2008/0092576 A1 discloses a support bracket suitable for use in a casing of an outdoor condensing unit including a main body configured to reside between a corner post and a coil of the condensing unit, a first extension member extending from a first end of the main body, and a second extension member extending from a second end of the main body.

US 2003/0122458 A1 is directed to an outdoor unit for an air conditioner having a reinforcing structure, the outdoor unit comprising a base plate arranged at a bottom portion of a body of the outdoor unit, an upper plate arranged at an upper portion of the body, a plurality of support members connected between the base plate and the upper plate and arranged towards the circumference of the body with predetermined intervals, and a reinforcing member arranged between the support members for supporting the body of the outdoor unit.

EP 2 787 290 A1 describes a casing of an outdoor unit including support pillars, each of the support pillars having standing wall portions arranged along the up and down direction, and a top plate mounted on upper ends of the support pillars.

GB 2 286 963 A discloses a cabinet side panel and interlocking frame strip assembly enabling the normally sharp corners of a cabinet to be covered and may provide a decorative embellishment that is attached to the four corners of a cabinet to enhance the attractiveness of the cabinet.

The present invention provides an outdoor device as claimed in independent claim 1. The dependent claims relate to further aspects of the invention.

### BRIEF DESCRIPTION OF THE DRAWINGS

Embodiments of the invention will be described in detail with reference to the following drawings in which like reference numerals refer to like elements, and wherein:
FIG. 1 is a perspective view of an outdoor device of an air conditioner according to an embodiment;
FIG. 2 is an exploded perspective view showing a coupling structure of components forming an appearance of the outdoor device of FIG. 1;
FIG. 3 is a plan view showing an inside of the outdoor device of FIG. 1;
FIG. 4 is an exploded perspective view showing a coupling structure of a side supporter and an outer panel according to an embodiment;
FIG. 5 is a partial cross-sectional view showing a portion at which the side supporter and the outer panel of FIG. 4 are coupled to each other;
FIG. 6 is a partial perspective view showing the side supporter of FIG. 4;
FIG. 7 is a perspective view of a side supporter according to another embodiment;
FIGs. 8A-8E are views sequentially showing changes in shape of the side supporter according to a possible method of manufacturing a side supporter (not covered by the present invention);
FIG. 9 is a schematic view showing a method of bending of the side supporter (not covered by the present invention); and
FIG. 10 is a perspective view showing an outdoor device of an air conditioner according to another embodiment.

### DETAILED DESCRIPTION

Hereinafter, embodiments of the invention will be described in detail with reference to the accompanying drawings. The embodiments may, however, be embodied in many different forms and should not be construed as being limited to the embodiments set forth herein; rather, alternate embodiments falling within the scope of the invention as defined by claim 1 will be apparent to those skilled in the art.

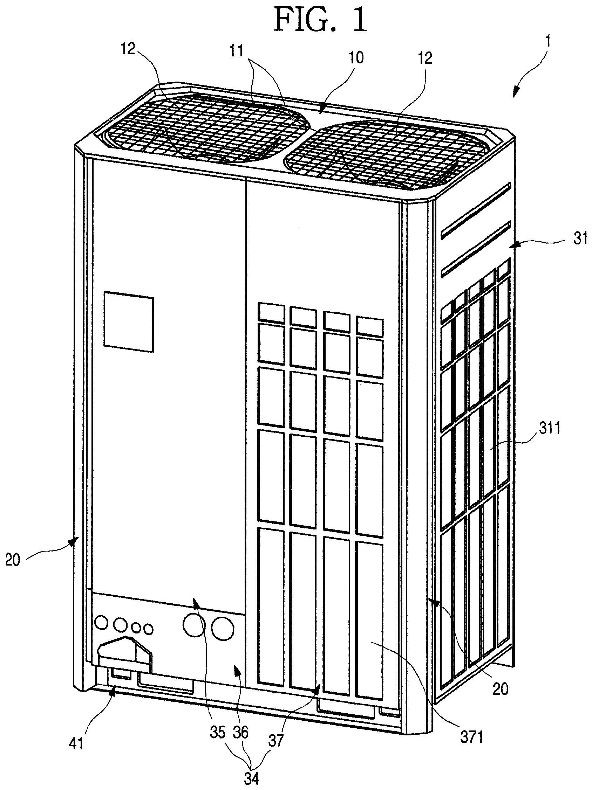

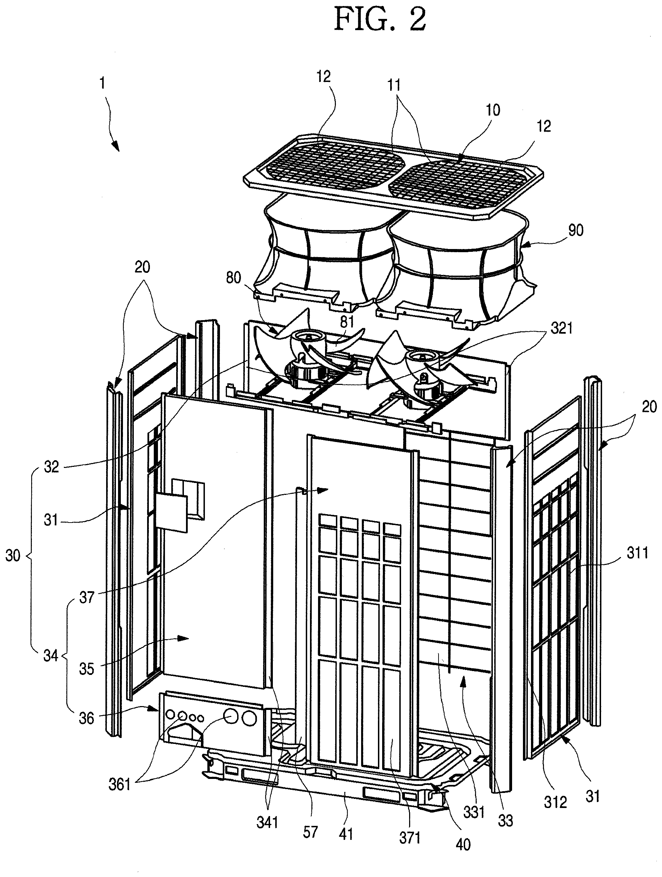

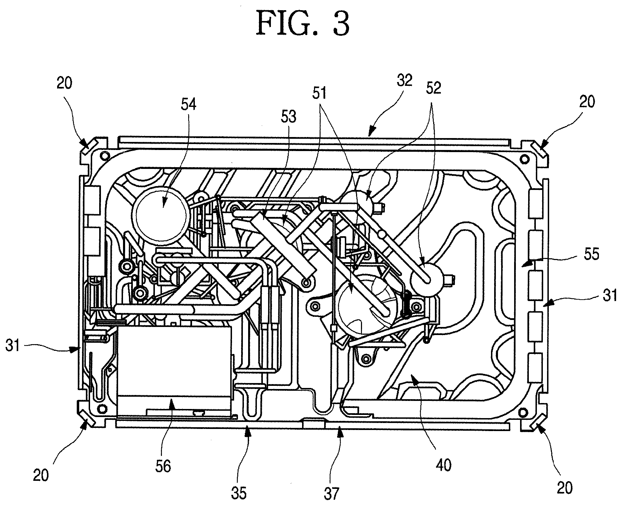

FIG. 1 is a perspective view of an outdoor device of an air conditioner according to an embodiment. FIG. 2 is an exploded perspective view showing a coupling structure of components forming an appearance of the outdoor device of FIG. 1. FIG. 3 is a plan view showing an inside of the outdoor device of FIG. 1.

As shown in FIGS. 1 to 3, an air conditioner according to an embodiment may include an outdoor unit or device 1 disposed or provided outdoors and an indoor unit or device (not shown) connected to the outdoor device 1 by a refrigerant pipe and disposed or provided indoors. The indoor device may include an indoor heat exchanger (not shown) that exchanges heat with indoor air.

An overall appearance of the outdoor device 1 may be formed by a top cover 10, a plurality of outer panels 30, a base pan 40, and a plurality of side supporters 20. The top cover 10 may be provided on or at an upper surface of the outdoor device 1 to form an appearance of an upper surface of the outdoor device 1. A plurality of discharge ports 11 are formed in the top cover 10, so that air heat-exchanged inside of the outdoor device 1 may be discharged outside of the outdoor device 1. A discharge grill 12 may be mounted in each of the plurality of discharge ports 11, so that it is possible to prevent external foreign substances from being introduced into the plurality of discharge ports 11.

The plurality of side supporter 20 may be provided in or at four corners of the outdoor device 1. The plurality of side supporter 20 may each be bent so that the side supporter 20 may connect the top cover 10 and the base pan 40 to form a corner of the outdoor device 1, or formed in a pipe-shape. The plurality of outer panels 30 may be provided between the plurality of side supporters 20 to form an appearance of a peripheral surface of the outdoor device 1.

Each side supporter 20 forms a space between the respective outer panels 30 connected to the respective side supporter 20, and form an inclined surface between the respective outer panels 30 so that the respective corner of the outdoor device 1 has the inclined surface.

The plurality of outer panels 30 may include a pair of side panels 31 that respectively form left and right or first and second side surfaces of the outdoor device 1, a front panel 34 that forms a front surface of the outdoor device 1, and a rear panel 32 that forms a rear surface of the outdoor device 1. The plurality of side panels 31 may form the left or first side surface and the right or second side surface of the outdoor device 1, and may be formed in a single plate shape that connects neighboring side supporters 20, the base pan 40, and the top cover 10.

An upper portion of each side panel 31, that is, a region corresponding to one or more shroud 90 inside of the outdoor device 1 may be solid, and a plurality of suction ports 311 may be formed in a lower remaining region except for the solid region. The plurality of suction ports 311 may be uniformly distributed over an entire region, in which an outdoor heat exchanger 55 that exchanges heat with suctioned air may be positioned, and guide air suctioned from a lateral side to pass through the outdoor heat exchanger 55. A position of the plurality of suction ports 311 formed in each side panel 31 may be changed according to a structure and position of the outdoor heat exchanger 55, and the plurality of suction ports 311 are provided in a region corresponding to the outdoor heat exchanger 55 and configured in such a manner that a portion not corresponding to the outdoor heat exchanger 55 may be solid so that suctioned air may all passes through the outdoor heat exchanger 55.

In left and right or first and second ends or sides of each side panel 31, a side panel coupling portion 312 bent to be coupled to the side supporter 20 is formed or provided. The side panel coupling portion 312 is bent toward the inside of the outdoor device 1, and then further bent toward the outside from an extending end of the outdoor heat exchanger 55 to have a structure which is coupled to a coupling portion 223 of the side supporter 20, which will be described hereinafter.

On a rear surface of the outdoor device 1, the rear panel 32 may be provided in or at a portion corresponding to a position of the one or more shroud 90. A suction grill 33 may be formed from a lower end of the rear panel 32 to the base pan 40. The suction grill 33 may be formed in a grid pattern by a plurality of wires, and may have a size corresponding to the outdoor heat exchanger 55 positioned on the outdoor device 1, for example. Thus, the suction grill 33 may allow a smooth inflow of outdoor air while protecting the outdoor heat exchanger 55 from an external impact or foreign substances.

In the left and right or first and second ends of the rear panel 32, a rear panel coupling portion 321 bent to be coupled to the side supporter 30 is further provided. The rear panel coupling portion 321 is bent toward the inside of the outdoor device 1, and then further bent toward the outside from an extending end of the outdoor heat exchanger 55 to have a structure by which it is coupled to the coupling portion 223 of the side supporter 20, which will be described hereinafter.

On a front surface of the outdoor device 1, the front panel 34 including a plurality of panels may be provided. The front panel 34 may include a service panel 35, a piping panel 36, and a suction panel 37.

The front surface of the outdoor device 1 may be divided into left and right or first and second sides with respect to a point from which the outdoor heat exchanger 55 extends. That is, on the left or first side of the outdoor device 1, the service panel 35 and the piping panel 36 may be provided, and on the right or second side of the outdoor device 1, the suction panel 37 may be provided.

The service panel 35 may be provided in or at a position corresponding to the extending end of the outdoor heat exchanger 55 in or at a left or first end of the outdoor device 1. The service panel 35 may be configured to be independently detachable in a state in which the plurality of panels included in the front panel 34 are all mounted. Thus, by attaching or detaching the service panel 35, internal components of the outdoor device 1 may be accessed. In particular, when opening the service panel 35, a whole control box 56 may be exposed to a front side, so that easy access to the individual components forming the refrigeration cycle and the refrigerant pipe connecting the individual components is possible.

A plurality of indoor device connection pipes that connects the outdoor device 1 and the indoor device may pass through the piping panel 36 and be fixed thereto. The piping panel 36 may be provided between a lower end of the service panel 35 and the base pan 40. The piping panel 36 may have a same width as a width of the service panel 35, and the service panel 35 may be formed to be separated from the piping panel 36 in a state in which the piping panel 36 is fixed and mounted to the base pan 40.

A plurality of pipe installation holes 361, through which the plurality of indoor device connection pipes, which may be connected to the indoor device may pass, may be formed in the piping panel 36. A service valve may be installed in each of the plurality of pipe installation holes 361 to facilitate connection and installation of the indoor device connection pipe connected to the indoor device. The piping panel 36 may be formed integrally with the service panel 35, as necessary.

The suction panel 37 may form the appearance of a remaining portion of the front surface of the outdoor device 1 except for the service panel 35 and the piping panel 36. The suction panel 37 may extend from the top cover 10 to the base pan 40, and extend from the side supporter 20 to the service panel 35 and the piping panel 36.

The suction panel 37 may extend up to the end of the outdoor heat exchanger 55, and allow a coupling plate 57, which may be provided inside of the outdoor device 1 and by which the end of the outdoor heat exchanger 55 may be fixed and the end of the suction panel 37 to be connected to each other. Thus, the outdoor heat exchanger 55 may be maintained in a stable fixed state by the suction panel 37. The suction panel 37 may shield an upper portion corresponding to the position of the one or more shroud 90, and a plurality of suction ports 371 may be formed in a remaining region corresponding to a region of the outdoor heat exchanger 55 to allow outdoor air to flow toward the outdoor heat exchanger 55.

In left and right or first and second ends or sides of each of the plurality of panels forming the front panel 34, a front panel coupling portion 341 bent to be coupled to the side supporter 20 or a neighboring another front panel 34 is formed. The front panel coupling portion 341 is bent toward the inside of the outdoor device 1, and then further bent toward the outside from the extending end of the outdoor heat exchanger 55 to have a structure by which it is coupled to the coupling portion 223 of the side supporter 20, which will be described hereinafter.

A bottom surface of the outdoor device 1 is formed by the base pan 40. The outdoor device 1 may be supported in a state of being spaced apart from a surface, such as a floor, by a base frame 41. In addition, on a top surface of the base pan 40, components, such as one or more compressor 51, and the outdoor heat exchanger 55, for example, which form the refrigeration cycle may be provided.

More specifically, on the top surface of the base frame 41, the one or more compressor 51 may be provided. The one or more compressor 51 may compress a refrigerant in a gas state to a high temperature and high pressure, and each of a constant-speed compressor rotated at a constant speed to compress the refrigerant to have a constant capacity, and an inverter compressor, whose rotational speed is variable according to a load to adjust a compression capacity may be provided in or as the one or more compressor 51. In the refrigerant pipe connected to the outlet of each of the constant-speed compressor and the inverter compressor of the one or more compressor 51, an oil separator 52 that separates oil contained in refrigerant discharged from the compressor 51 may be provided to separate oil contained in discharged refrigerant and recover the separated oil back to the compressor 51.

On one side of the outdoor device 1, a four-way valve 53 that allows the refrigerant having passed through the oil separator 52 to be selectively supplied to the indoor heat exchanger (not shown) or the outdoor heat exchanger 55 may be provided. The four-way valve 53 may be connected to each of the indoor heat exchanger, the outdoor heat exchanger 55, the one or more compressor 51, and an accumulator 54, and switch the corresponding flow path so that the refrigerant discharged from the compressor 51 may be selectively supplied to the indoor heat exchanger and the outdoor heat exchanger 55 according to a cooling operation or a heating operation.

The accumulator 54 may be connected to the indoor heat exchanger and the four-way valve 53 on or at one side of the base pan 40. The accumulator 54 may allow the refrigerant in the liquid state to be stored and the refrigerant in the gas state to be supplied to the one or more compressor 51, by separating the introduced refrigerant in the liquid state and refrigerant in the gas state.

The outdoor heat exchanger 55 may exchange heat between outdoor air and the refrigerant, and heat exchange may be carried out between the outdoor air and the refrigerant while the outdoor air is forcibly passed through the outdoor heat exchanger 55 by a blowing fan 81 of one or more fan blowing assembly 80.

The outdoor heat exchanger 55 extends along a periphery of the base pan 40 and may be provided along four sides of the outdoor device 1. Ends of the outdoor device 1 may be spaced apart from each other in a corner formed by a left or first surface and a front or second surface of the outdoor device 1, and generate a predetermined space. The space between the ends of the outdoor device 1 may be open when the service panel 35 is separated, so as to provide access to various pipes forming the refrigeration cycle and the control box 56 through this space.

The outdoor heat exchanger 55 may extend from the base pan 40 up to a height adjacent to the one or more blowing fan assembly 80. Thus, the outdoor heat exchanger 55 may cover all of the plurality of suction ports 311, 331, and 371 inside of the outdoor unit 1, and allow all of the air passing through the plurality of suction ports 311, 331, and 371 to pass through the outdoor heat exchanger 55.

The one or more shroud 90 may be mounted in or at an inner upper portion of the outdoor device 1, and the one or more fan motor assembly 80 may be provided inside of the one or more shroud 90, respectively. The one or more shroud 90 may guide the discharged air and be opened in a vertical direction, and a side surface of each shroud 90 may be rounded in such a manner that a center of the shroud 90 is recessed inwardly, and an opening of the shroud 90 may be increased as it extends from the center of the shroud 90 toward an upper portion thereof. The opened top surface of the respective shroud 90 may have a same shape as a shape of one of the plurality of discharge ports 11 to effectively guide the discharged air to the respective discharge port 11.

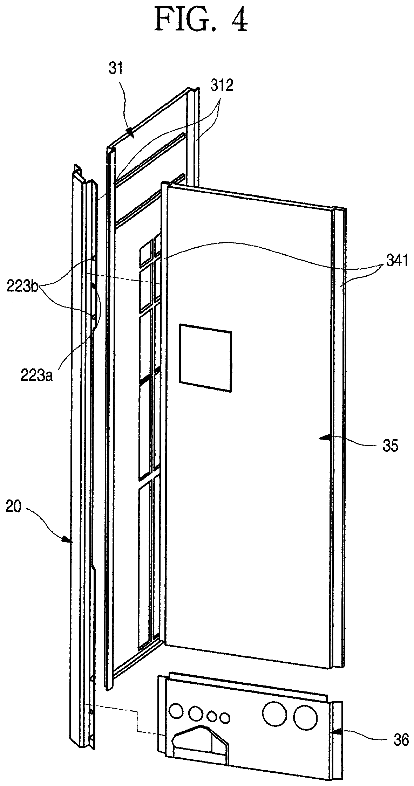

Hereinafter, a configuration of the side support will be described with reference to FIGS. 4 to 6.

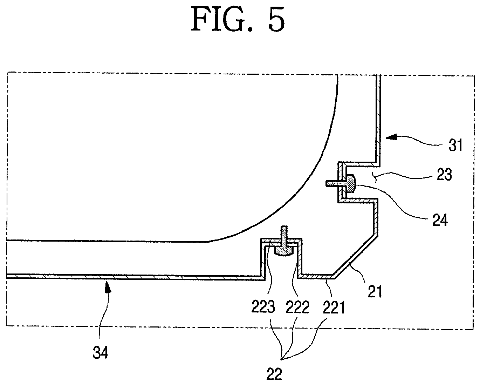

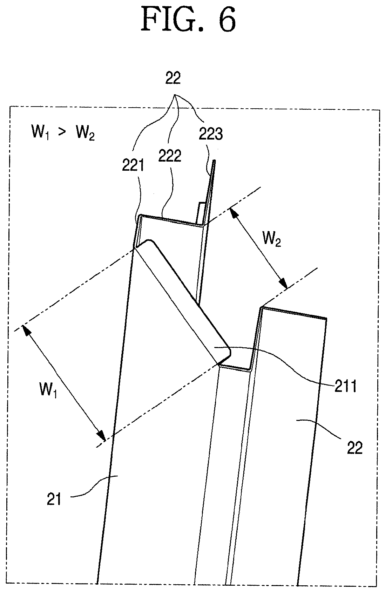

FIG. 4 is an exploded perspective view showing a coupling structure of a side supporter and an outer panel according to an embodiment. FIG. 5 is a partial cross-sectional view showing a portion at which the side supporter and the outer panel of FIG. 4 are coupled to each other. FIG. 6 is a partial perspective view showing the side supporter of FIG. 4.

As shown in the drawings, the side supporter 20 may extend from a surface on which the outdoor device 1 may be installed to the top cover 10, and may be provided at four corners of the outdoor device 1 to form a structure that supports the outdoor device 1 as a whole. In addition, the side supporter 20 forms an inclined corner surface of the outdoor device 1, and may be provided between the front surface and the side surface of the outdoor device 1 or between the plurality of outer panels 30 forming the side surface and the rear surface so that the side supporter 20 may be coupled to the outer panels 30. The side supporter 20 is consecutively bent, and includes an inclined surface 21 that forms the corner of the outdoor device 1 and a pair of extending surfaces 22, which is formed at both ends of the inclined surface 21 and consecutively bent to be coupled to the plurality of outer panels 30.

An upper portion of the side supporter 20 may be inserted into the top cover 10, and a bent portion 211 bent inwardly may be formed in or at an upper end of the inclined surface 21 to support the top cover 10 from below the top cover 10.

A configuration of the side supporter 20 will be described hereinafter. The inclined surface 21 is formed in or at a center of the side supporter 20 in a lateral direction. The inclined surface 21 forms the corner surface of the outdoor device 1, is formed to have a width capable of generating a space between neighboring outer panels 30, and may extend from an upper end of the outdoor device 1 to a lower end thereof along a length of the side supporter 20.

The pair of extending surfaces 22 form left and right or first and second sides of the side supporter 20. The pair of extending surfaces 22 extend from the left and right or first and second ends of the inclined surface 21, and are formed to be consecutively bent. The pair of extending surface 22 may be symmetrical to each other at the first and second ends of the inclined surface 21, and may have a same structure and shape.

The pair of extending surfaces 22 include a first side surface 221, a second side surface 222, and the coupling portion 223, which are formed in or at first and second ends of the second side surface 222. The first side surface 221 extends from the first and second side ends of the inclined surface 21 and is bent at a predetermined angle. When the first side surface 221 is connected to the outer plurality of panels 30 connected to the coupling portion 223, for example, the side panel 31 and the service panel 35 in a state in which the first side surface 221 is bent, the first side surface 221 may be coplanar with the side panel 31 and the service panel 35, which may be coupled to the coupling portion 223. That is, the first side surface 221 may form both side surfaces of the outdoor device 1 or an end of the rear surface thereof.

The second side surface 222 is bent from the extending end of the first side surface 221 in an inward direction of the outdoor device 1. The second side surface 222 extends a predetermined length, and vertical grooves 23 are formed in an exposed portion of the side supporter 20, that is, between the first side surface 221 and the outer panel 30 connected to the side supporter 20, and may be bent in a manner to cross the first side surface 221 perpendicularly. A width and depth of an opening of the vertical groove 23 may be determined by an angle at which the second side surface 222 is bent and an extending length of the second side surface 222. The vertical groove 23 may be provided on the first and second sides on the basis of the corner of the outdoor device 1, and when the outdoor device 1 is transported or installed, a user may put his or her hand into the vertical groove 23, thereby improving mobility of the outdoor device 1.

The coupling portion 223 is bent outwardly from the extending end of the second side surface 222. The coupling portion 223 is coupled to the panel coupling portions, which is bent in the outer panel 30, and may be coupled to the panel coupling portions in a coupling or engaging method by a separate coupling member 24, such as a screw. Thus, a coupling hole 223a, to which the coupling member 24 may be fastened or an engaging portion 223b engaged with the panel coupling portion may be formed in the coupling portion 223. The coupling portion 223 may be coupled to the panel coupling portion in a manner to be overlapped with each other, and formed to be bent to have an angle corresponding to the panel coupling portion.

The pair of extending surfaces 22, which may extend from the ends of the inclined surface 21 in a state in which the side supporter 20 is molded, may be provided to face each other, and may be formed in a state of being opened toward the inside of the outdoor device 1. A lateral width W₁ of the inclined surface 21 may correspond to a distance W₂ between left and right or first and second sides of a point in which the second side surface 222 and the coupling portion 223 are connected to each other.

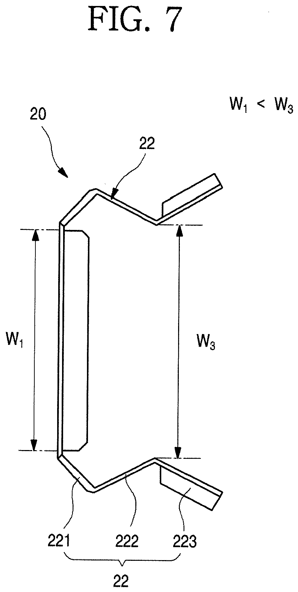

FIG. 7 is a perspective view of a side supporter according to another embodiment. As shown in FIG. 7, the side supporter 20 may have various other structures according to a degree to which the pair of extending surfaces 22 are bent.

The pair of extending surfaces 22 is formed at the first and second ends of the inclined surface 21 of the side supporter 20, and each of the pair of extending surfaces 22 includes first side surface 221, second side surface 222, and coupling portion 223. In this instance, the configuration of the extending surfaces 22 may be the same as that of the extending surfaces 22 of the side supporter 20 described with respect to FIG. 6.

However, a lateral width of the inclined surface 21 may be formed to be smaller than a distance between first and second sides of a point at which the second side surface 222 and the coupling portion 223 are connected to each other. That is, a distance W3 between the pair of extending surfaces 22 opened toward the inside of the outdoor device 1 may be larger than the width W1 of the inclined surface 21. In the above-described structure, a die for forming the pair of extending surfaces 22 may be easily taken in/taken out, and therefore, it is possible to more easily mold the side supporter 20 with a simple mold structure.

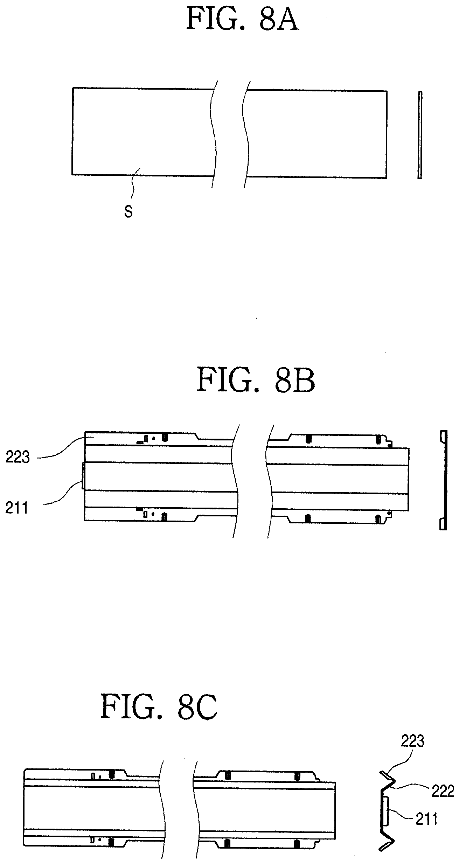

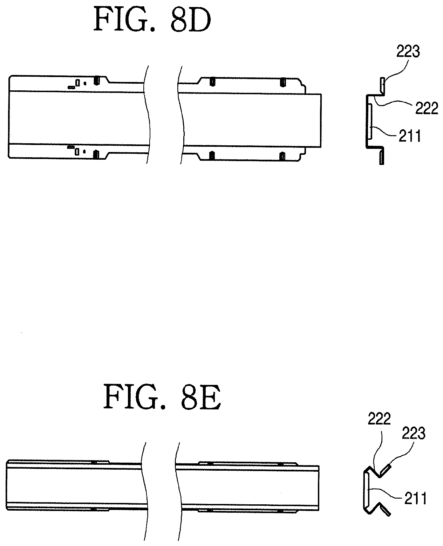

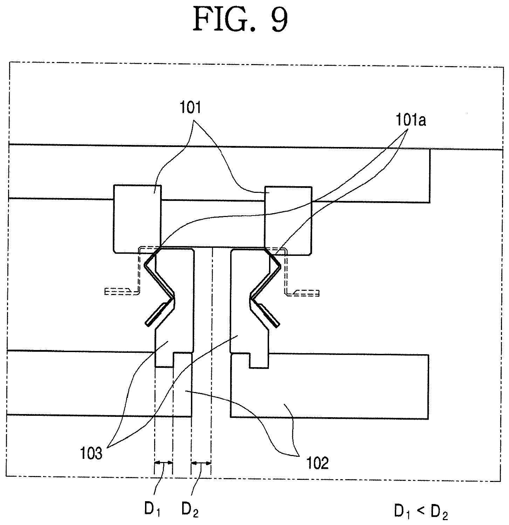

Hereinafter, a method for molding a side supporter of an air conditioner having the above-described structure will be described with reference to FIGS. 8 and 9.

FIGs. 8A-8E are views sequentially showing changes in shape of the side supporter according to a method of manufacturing of a side supporter. FIG. 9 is a schematic view showing a method of bending of the side supporter.

In order to mold the side supporter 20, a metal sheet S corresponding to an entire length and width of the side supporter 20 may be first supplied, as shown in FIG. 8A. A portion of each of upper and lower ends and left and right side ends of the supplied metal sheet S may be cut by press working, and therefore, a portion of each of an appearance of the bent portion 211 and the coupling portion 223 may be formed as shown in FIG. 8B. In addition, at a time of press working, a coupling hole 223a formed in the coupling portion 223 or an engaging portion 223b engaged with the panel coupling portion may be simultaneously molded.

Next, the inclined surface 21 may be formed by press working, and primary bending may be performed by press working so that the pair of extending surfaces may be formed on both first and second ends of the inclined surface 21. By the primary bending, the bent portion 211 may be bent, and at a same time, the coupling portion 223 and the second side surface 222 may be primarily molded by bending, as shown in FIG. 8C.

After the primary molding of the pair of extending surfaces 22, the pair of extending surfaces 22 may be further bent by press working once more. That is, by a secondary bending, the second side surface 222 and the coupling portion 223 extending from the second side surface 222 may be completely molded, as shown in FIG. 8D.

Finally, in a state in which the second side surface 222 and the coupling portion 223 are molded, molding of the pair of extending surfaces 22 may be completed by final press working. That is, the first side surface 221 may be finally molded by third bending, as shown in FIG. 8E.

In a third bending, a molding portion 101a to mold the first side surface 221 may be formed in an upper die 101, and a pair of cam punches 103 capable of sliding laterally may be provided in a lower die 102 to be inserted between the opened extending surfaces 22 of the side supporter 20. In a state in which the pair of cam punches 103 is inserted between the pair of extending surfaces 22 in order to mold the pair of extending surfaces 22, and then slidably moved in outward directions, the first side surface 221 and the pair of extending surfaces 22 may be simultaneously molded while the upper die 101 is moved downward. In this instance, the pair of extending surfaces 22 provided on both sides may be simultaneously molded, and after the molding of the pair of extending surfaces 22, the pair of cam punches 103 may be slidably moved again in a direction in which the pair of cam punches 103 become closer to each other, so they can be removed from the opening formed by the pair of extending surfaces 22.

For this, an escape distance D1 of the pair of cam punches 103 which may be recessed in order to mold the pair of extending surfaces 22 may be shorter than a sliding distance D2 of the pair of cam punches 103. Thus, by the above-described structure of the pair of cam punches 103, the pair of cam punches 103 may allow the pair of extending surfaces 22 to be simultaneously molded. The pair of extending surfaces 22 may be molded twice using a single cam punch or alternately using the pair of cam punches, as necessary, and in this case, it is relatively free from constraints of size and shape of the cam punch.

Meanwhile, an air conditioner according to various embodiments other than the air conditioner according to the above-described embodiment may be possible.

An outdoor unit or device of an air conditioner according to another embodiment may include a plurality of supporter suction ports formed on an inclined surface of a side supporter, so that suction of outdoor air may be possible even in a corner side of the outdoor device. In the air conditioner according to this embodiment, other configurations except a shape of the supporter may be the same as those of the previous embodiment, and thus, repeated description thereof has been omitted.

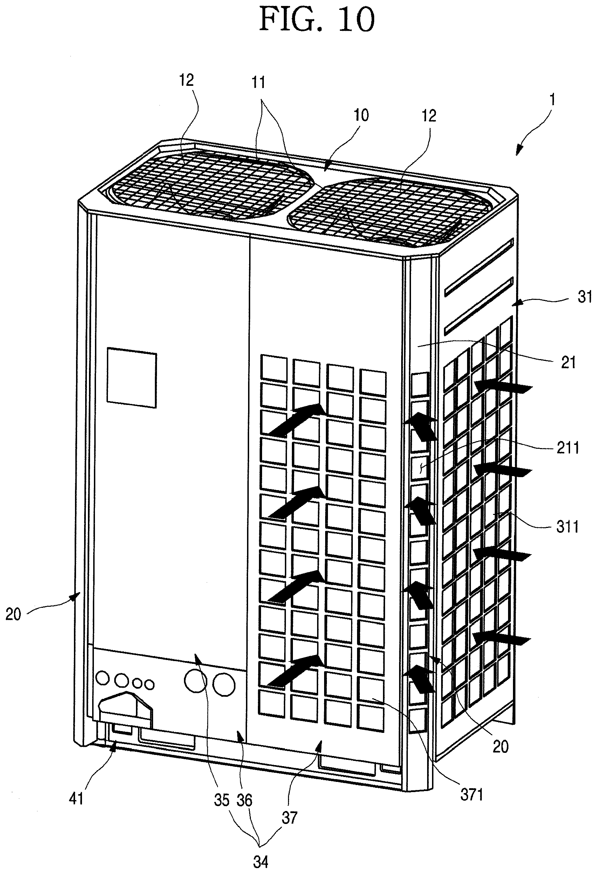

FIG. 10 is a perspective view showing an outdoor device of an air conditioner according to another embodiment. As shown in FIG. 10, an appearance of outdoor device 1 of an air conditioner according to another embodiment may be formed by top cover 10, base pan 40 that forms the bottom surface of the outdoor device 1, base frame 41 that supports the base pan 40, side supporters provided between the top cover 10 and the base pan 40 to form corners of the outdoor device 1, and a plurality of outer panels, which may be connected between the side supporters 20 to form a periphery of the outdoor device 1, in a same manner as that of the previous embodiment.

Although not shown, components, such as one or more compressor 51, oil separator 52, outdoor heat exchanger 55, and accumulator 54, for example, which form a refrigeration cycle, one or more fan motor assembly 80, one or more shroud 90, and control box 56 to control these components, for example, may be provided inside of the outdoor device 1. The outdoor heat exchanger 55 may extend along four sides, and is provided along the periphery of the base pan 40. A plurality of suction ports 311, 331, and 371 are provided in the plurality of outer panels 30 in a region corresponding to the outdoor heat exchanger 55, so that suction of outdoor air may be possible in the four surfaces of the outdoor device 1.

The overall structure of the side supporters 20 forming the corners of the outdoor device 1 may be the same as that in the previous embodiment, but a plurality of supporter suction ports 212 may be formed on the inclined surface 21 forming the corners of the outdoor device 1. The plurality of supporter suction ports 211 may be consecutively provided at regular intervals along the inclined surface 21, and extend from an upper end of the base pan 40 to a lower end of the one or more shroud 90.

The plurality of supporter suction ports 211 may have a same vertical length as suction ports 311, 331, and 371 formed on the plurality of outer panels 30 connected to the side supporters 20, for example, the front panel 34 and the side panel 31, and provided at equal intervals, so that the appearance of the outdoor device 1 has a sense of unity as a whole, and an effective inflow of outdoor air may be possible.

The plurality of supporter suction ports 212 may be formed in each of the side supporters 20 provided in the four corners of the outdoor device 1. In the side supporter 20 positioned in a region through which the outdoor heat exchanger 55 does not pass among the side supporters 20, the plurality of supporter suction ports 212 may not be formed.

Hereinafter, flow of air by operation of an outdoor device of an air conditioner having the above-described structure will be described.

When operation of the outdoor device of an air conditioner starts, a refrigerant may be compressed by driving of the one or more compressor 51, and the compressed refrigerant may be circulated by the refrigerant cycle. When the outdoor device performs a cooling operation, the outdoor heat exchanger 55 may function as a condenser, and the flow of air may be forcibly formed in order to exchange heat with the refrigerant passing through the outdoor heat exchanger 55.

The fan 81 of blowing fan assembly 80 may be rotated by driving of a motor simultaneously with driving of the one or more compressor 51. The air outside of the outdoor device 1 may be suctioned through the four surfaces of the outdoor device 1 by rotation of the fan 81 to pass through the outdoor heat exchanger 55, and the air introduced into the outdoor device 1 by passing through the outdoor heat exchanger 55 may be discharged to the plurality of discharge ports 11 via the fan 81 while passing through the one or more shroud 90.

Even via the plurality of supporter suction ports 212 of the side supporters 20 forming the corners of the outdoor device 1, suction of outdoor air may be possible, and therefore, heat exchange by the suction of the outdoor air may be made possible up to a section in which the outdoor heat exchanger 55 is bent. That is, even in the corners of the outdoor device 1, in which the outdoor heat exchanger 55 is bent, in addition to the four surfaces of the outdoor device 1 on which the plurality of suction ports 311, 331, and 371 are formed, suction of the outdoor air may be achieved, so that heat exchange on an entire surface of the outdoor heat exchanger 55 may be performed. Thus, heat exchange may be performed on the entire surface of the outdoor heat exchanger 55 while adopting structure for reinforcing a strength of the outdoor device 1 using the side supporters 20, and therefore, it is possible to improve heat exchange efficiency whiling reinforcing the strength of the outdoor device 1.

As described above, according to an outdoor device for an air conditioner according to embodiments disclosed herein, side supporters are provided in portions forming corners of the outdoor device, and outer panels are provided between the side supporters. Thus, a strength of the corners of the outdoor device and an overall appearance thereof may be improved.

In addition, inclined surfaces forming the corners of the outdoor device are formed in the side supporters, and therefore, corners of the outdoor device may have an inclined surface rather than forming a right angle. Thus, at a time of transport and installation of the outdoor device, the outdoor device may be more easily taken in and taken out when it is rotated in a narrow space or it passes through an elevator or a door.

In addition, when the side supporter and the plurality of outer panels are coupled to each other, a vertical groove is provided, so that an operator may manipulate a position of the outdoor device by putting his or her hand into the vertical groove upon transport and installation of the outdoor device, thereby improving an installation and transport properties.

In addition, the plurality of supporter suction ports may be formed on the inclined surface of the side supporters, so that suction of the outdoor air may be possible. Thus, even in the corners of the outdoor device, that is, a section in which the outdoor heat exchanger is bent, heat exchange by suction of the outdoor air may be possible. Thus, heat exchange may be performed on an entire surface of the outdoor heat exchanger while adopting structure for reinforcing a strength of the outdoor device by the side supporters, and therefore, it is possible to improve heat exchange efficiency whiling reinforcing the strength of the outdoor device.

Embodiments disclosed herein provide an outdoor device for an air conditioner, which may be more easily transported and installed while reinforcing a strength of corners thereof.

Embodiments disclosed herein further provide an outdoor device of an air conditioner in which suction of outdoor air may be possible, even through corners thereof.

Embodiments disclosed herein provide an outdoor device in accordance with the invention as defined in claim 1. The second side surface portion and the coupling portion may be disposed perpendicular to each other.

A first side surface portion or surface, bent at both side ends of the inclined surface and coplanar with an outer surface of the outer panel, may be formed, and the first side surface portion may form a part or portion of a peripheral surface of the outdoor unit.

A distance between a pair of bent portions on both side surfaces may be formed to be larger than a lateral width of the inclined surface. Vertical grooves spaced apart from each other are formed between an outer surface of the side supporter and the outer surface of the outer panel.

A periphery of the top cover may be formed to be bent and receive an upper end of the side supporter. A support portion bent at an upper end of the inclined surface to support a lower surface of the top cover may be further formed.

A plurality of supporter suction ports, which may be opened along the inclined surface and supply outdoor air toward the outdoor heat exchanger, may be formed on the inclined surface. The supporter suction ports may be formed between the suction ports of the outer panels disposed or provided on both sides of the supporter. The supporter suction ports may have a same length as that of the suction port positioned at a same height.

The supporter suction ports may be formed in a region between the base pan and a shroud disposed or provided above the outdoor heat exchanger to guide discharge of air. Also, the supporter suction ports may be formed in the side supporter disposed in a position corresponding to a bent corner of the outdoor heat exchanger among the side supporters.

Further disclosed herein (but not covered by the present invention) is a manufacturing method of a side supporter for an outdoor device for an air conditioner that may include supplying a metal sheet having a predetermined length and width; cutting an end portion or end of the metal sheet by press working, and molding a coupling hole or an engaging portion, which may be coupled to an end portion or end of an outer panel, in a coupling portion of a side supporter; and forming a pair of extending surfaces in the side supporter by press working, and bending the extending surfaces multiple times so that the extending surfaces may include an inclined surface forming a corner portion of an outdoor unit or device of the air conditioner. At the time of bending the extending surfaces, a cam punch may be inserted into a space formed when the pair of extending surfaces are bent, and then slidably moved to a lateral side to mold the extending surfaces. The forming and bending may include primarily bending the extending surfaces so that the second side surface portion and coupling portion of the side supporter are bent at a predetermined angle; secondarily bending the extending surfaces so that the second side surface portion is perpendicular to the inclined surface and the second side surface portion is perpendicular to the coupling portion; and thirdly bending the extending surfaces so that the inclined surface is bent to have a predetermined inclination relative to the second side surface portion. Also, a pair of cam punches may be provided, and slidably moved in such a manner that the cam punches become close to each other when the cam punches are taken in the space formed when the pair of extending surfaces are bent and become away from each other when the extending surfaces are processed.

An escape distance depressed in the cam punch in order to mold the extending surface may be formed to be smaller than a sliding distance of the cam punch. Also, the cam punch may bend the extending surface on one side, and then bend the extending surface on the opposite side again. A distance between the pair of extending surfaces may be formed to be larger than a width of the cam punch.

## Claims

1. An outdoor device of an air conditioner, comprising:
a top cover (10) that forms an upper surface of the outdoor device and in which a plurality of discharge ports (11) is formed;
a base pan (40) that forms a lower surface of the outdoor device;
an outdoor heat exchanger (55) that extends along a periphery of the base pan (40);
a plurality of side supporters (20) that connects the top cover (10) and the base pan (40) and forms corners of the outdoor device; and
a plurality of outer panels (30) provided between the plurality of side supporters (20) and coupled to the plurality of side supporters (20) to form a shape of an outer periphery of the outdoor device, wherein a plurality of suction ports (311, 331, 371), through which outside air is suctioned, is formed in a region of the plurality of outer panels (30) corresponding to the outdoor heat exchanger (55), and
wherein each of the plurality of side supporters (20) includes an inclined surface (21) forming a surface inclined between outer surfaces of neighboring ones of the plurality of outer panels (30), and a pair of extending surfaces (22) formed at both side ends of the inclined surface (21) and bent multiple times,
wherein each of the extending surfaces (22) includes a first side surface (221) bent at the respective side end of the inclined surface (21) and coplanar with an outer surface
of the respective outer panel (30), a second side surface (222) bent from the first side surface (221) toward an inside of the outdoor device and then extended, and a coupling portion (223) bent from the second side surface (222) toward the outside and coupled to the respective outer panel (30), and
wherein each of the plurality of outer panels (30) includes a coupling portion (312, 321, 341) bent and coupled to the side supporter (20), the coupling portion (312,321,341) being bent toward the inside of the outdoor device and then further bent toward the outside from an extending end of the outdoor heat exchanger (55) and coupled to the coupling portion (223),
**characterized in that** vertical grooves (23) spaced apart from each other are formed between an outer surface of each of the pair of extending surfaces (22) and an outer surface of the corresponding outer panel (30) connected to said side supporter (20), so that a user may put his or her hand into the vertical grooves (23) when the outdoor device is transported or installed.

2. The outdoor device according to claim 1, wherein the second side surface (222) and the coupling portion (223) extend substantially perpendicular to each other.

3. The outdoor device according to claim 1, wherein a first side surface (221) is bent at both side ends of the inclined surface (21), which is coplanar with the respective outer surface of a respective outer panel (30) of the plurality of outer panels (30), and wherein the first side surface (221) forms a portion of a peripheral surface of the outdoor device.

4. The outdoor device according to any one of the preceding claims, wherein a distance between a pair of bent portions (221) that extend, respectively, from side ends of the inclined surface (21) is larger than a lateral width of the inclined surface (21).

5. The outdoor device according to any one of the preceding claims, wherein a width and depth of an opening of the vertical groove (23) is determined by an angle at which the second side surface (222) is bent and an extending length of the second side surface (222).

6. The outdoor device according to any one of the preceding claims, wherein a periphery of the top cover (10) is bent and receives upper ends of the plurality of side supporters (20).

7. The outdoor device according to claim 6, wherein a bent portion (221) is provided at an upper end of the inclined surface (21) to support a lower surface of the top cover (10).

8. The outdoor device according to any one of the preceding claims, wherein a plurality of supporter suction ports (212), which are opened along the inclined surface (21) and supply outside air toward the outdoor heat exchanger (55), is formed on the inclined surface (21) of each supporter (20).

9. The outdoor device according to claim 8, wherein the plurality of supporter suction ports (221) is formed between the plurality of suction ports (311, 331, 371) of the plurality of outer panels (30) provided at both sides of the respective supporter (20).

10. The outdoor device according to claim 9, wherein the plurality of supporter suction ports (221) has a same length as a length of a suction port (311, 331, 371) positioned at a same height.

11. The outdoor device according to claim 8, 9, or 10, wherein the plurality of supporter suction ports (221) is formed in a region between the base pan (40) and one or more shroud (90) provided above the outdoor heat exchanger (55) to guide discharge of air.

12. The outdoor device according to any one of claims 8 to 11, wherein the plurality of supporter suction ports (221) is formed in each of the plurality of side supporters (20) provided in a position corresponding to a bent corner of the outdoor heat exchanger (55) among the plurality of side supporters (20).

## Patentansprüche

1. Außenvorrichtung einer Klimaanlage, die aufweist:
eine obere Abdeckung (10), die eine obere Fläche der Außenvorrichtung bildet und in der mehrere Auslassöffnungen (11) ausgebildet sind,
eine Bodenwanne (40), die eine untere Fläche der Außenvorrichtung bildet,
einen Außenwärmetauscher (55), der sich entlang eines Umfangs der Bodenwanne (40) erstreckt;
mehrere Seitenträger (20), die die obere Abdeckung (10) und die Bodenwanne (40) verbinden und Ecken der Außenvorrichtung bilden, und
mehrere Außenplatten (30), die zwischen den mehreren Seitenträgern (20) vorgesehen und mit den mehreren Seitenträgern (20) gekoppelt sind, um eine Form eines Außenumfangs der Außenvorrichtung zu bilden, wobei mehrere Ansaugöffnungen (311, 331, 371), durch die Außenluft angesaugt wird, in einem Bereich der mehreren Außenplatten (30) ausgebildet sind, die dem Außenwärmetauscher (55) entsprechen, und wobei jeder der mehreren Seitenträger (20) eine geneigte Fläche (21), die eine Fläche bildet, die zwischen Außenflächen benachbarter der mehreren Außenplatten (30) geneigt ist, und ein Paar von Verlängerungsflächen (22) aufweist, die an beiden Seitenenden der geneigten Fläche (21) ausgebildet und mehrfach gebogen sind,
wobei jede der Verlängerungsflächen (22) eine erste Seitenfläche (221), die an dem jeweiligen Seitenende der geneigten Fläche (21) gebogen und koplanar mit einer Außenfläche der jeweiligen Außenplatte (30) ist, eine zweite Seitenfläche (222), die von der ersten Seitenfläche (221) zu einer Innenseite der Außenvorrichtung gebogen und dann verlängert ist, und einen Kopplungsabschnitt (223) aufweist, der von der zweiten Seitenfläche (222) zur Außenseite gebogen und mit der jeweiligen Außenplatte (30) gekoppelt ist, und
wobei jede der mehreren Außenplatten (30) einen Kopplungsabschnitt (312, 321, 341) aufweist, der gebogen und mit dem Seitenträger (20) gekoppelt ist, wobei der Kopplungsabschnitt (312, 321, 341) zur Innenseite der Außenvorrichtung gebogen ist und dann von einem sich Verlängerungsende des Außenwärmetauschers (55) weiter in Richtung der Außenseite gebogen und mit dem Kopplungsabschnitt (223) gekoppelt ist, **dadurch gekennzeichnet, dass** vertikale Nuten (23), die voneinander beabstandet sind, zwischen einer Außenfläche jedes des Paars der Verlängerungsflächen (22) und einer Außenfläche der entsprechenden Außenplatte (30) ausgebildet sind, die mit dem Seitenträger (20) verbunden ist, so dass ein Benutzer seine Hand in die vertikalen Nuten (23) stecken kann, wenn die Außenvorrichtung transportiert oder installiert wird.

2. Außenvorrichtung nach Anspruch 1, wobei die zweite Seitenfläche (222) und der Kopplungsabschnitt (223) im Wesentlichen senkrecht zueinander verlaufen.

3. Außenvorrichtung nach Anspruch 1, wobei eine erste Seitenfläche (221) an beiden Seitenenden der geneigten Fläche (21) gebogen ist, die koplanar mit der jeweiligen Außenfläche einer jeweiligen Außenplatte (30) der mehreren Außenplatten (30) ist, und wobei die erste Seitenfläche (221) einen Teil einer Umfangsfläche der Außenvorrichtung bildet.

4. Außenvorrichtung nach einem der vorhergehenden Ansprüche, wobei ein Abstand zwischen einem Paar von gebogenen Abschnitten (221), die sich jeweils von Seitenenden der geneigten Fläche (21) erstrecken, größer ist als eine seitliche Breite der geneigten Fläche (21).

5. Außenvorrichtung nach einem der vorhergehenden Ansprüche, wobei eine Breite und Tiefe einer Öffnung der vertikalen Nut (23) durch einen Winkel, unter dem die zweite Seitenfläche (222) gebogen ist, und eine Erstreckungslänge der zweiten Seitenfläche (222) bestimmt wird.

6. Außenvorrichtung nach einem der vorhergehenden Ansprüche, wobei ein Umfang der oberen Abdeckung (10) gebogen ist und obere Enden der mehreren Seitenträger (20) aufnimmt.

7. Außenvorrichtung nach Anspruch 6, wobei ein gebogener Abschnitt (221) an einem oberen Ende der schrägen Fläche (21) vorgesehen ist, um eine untere Fläche der oberen Abdeckung (10) zu halten.

8. Außenvorrichtung nach einem der vorhergehenden Ansprüche, wobei mehrere Träger-Ansaugöffnungen (212), die entlang der geneigten Fläche (21) geöffnet sind und Außenluft zum Außenwärmetauscher (55) zuführen, an der geneigten Fläche (21) jedes Trägers (20) ausgebildet sind.

9. Außenvorrichtung nach Anspruch 8, wobei die mehreren Träger-Ansaugöffnungen (221) zwischen den mehreren Ansaugöffnungen (311, 331, 371) der mehreren Außenplatten (30) ausgebildet sind, die an beiden Seiten des jeweiligen Trägers (20) vorgesehen sind.

10. Außenvorrichtung nach Anspruch 9, wobei die mehreren Träger-Ansaugöffnungen (221) dieselbe Länge aufweisen wie die Länge einer Ansaugöffnung (311, 331, 371), die in derselben Höhe angeordnet ist.

11. Außenvorrichtung nach Anspruch 8, 9 oder 10, wobei die mehreren Träger-Ansaugöffnungen (221) in einem Bereich zwischen der Bodenwanne (40) und einer oder mehreren Ummantelungen (90) ausgebildet sind, die über dem Außenwärmetauscher (55) vorgesehen sind, um den Luftausstoß zu leiten.

12. Außenvorrichtung nach einem der Ansprüche 8 bis 11, wobei die mehreren Träger-Ansaugöffnungen (221) in jedem der mehreren Seitenträger (20) ausgebildet sind, die an einer Position vorgesehen sind, die einer gebogenen Ecke des Außenwärmetauschers (55) unter den mehreren Seitenträgern (20) entspricht.

## Revendications

1. Dispositif extérieur d'un climatiseur, comprenant :
un couvercle supérieur (10) formant une surface supérieure du dispositif extérieur et où est formée une pluralité d'orifices de refoulement (11) ;
une plaque de base (40) formant une surface inférieure du dispositif extérieur ;
un échangeur de chaleur extérieur (55) s'étendant le long de la périphérie de la plaque de base (40) ;
une pluralité de supports latéraux (20) raccordant le couvercle supérieur (10) et la plaque de base (40) et formant des coins du dispositif extérieur ; et
une pluralité de panneaux extérieurs (30) prévus entre la pluralité de supports latéraux (20) et raccordés à la pluralité de supports latéraux (20) de manière à donner sa forme à une périphérie extérieure du dispositif extérieur, une pluralité d'orifices d'aspiration (311, 331, 371), par lesquels est aspiré de l'air extérieur, étant formée dans une zone de la pluralité de panneaux extérieurs (30) correspondant à l'échangeur de chaleur extérieur (55), et
où chaque support de la pluralité de supports latéraux (20) comprend une surface inclinée (21) formant une surface inclinée entre des surfaces extérieures de panneaux contigus de la pluralité de panneaux extérieurs (30), et une paire de surfaces d'extension (22) formées aux deux extrémités latérales de la surface inclinée (21) et pliées plusieurs fois,
où chacune des surfaces d'extension (22) comprend une première surface latérale (221) pliée à l'extrémité latérale respective de la surface inclinée (21) et coplanaire à la surface extérieure du panneau extérieur (30) respectif, une deuxième surface latérale (222) pliée depuis la première surface latérale (221) vers l'intérieur du dispositif extérieur avant de s'étendre, et une partie de raccordement (223) pliée vers l'extérieur depuis la deuxième surface latérale (222) et raccordée au panneau extérieur (30) respectif, et
où chaque panneau de la pluralité de panneaux extérieurs (30) comprend une partie de raccordement (312, 321, 341) pliée et raccordée au support latéral (20), ladite partie de raccordement (312, 321, 341) étant pliée vers l'intérieur du dispositif extérieur avant d'être à nouveau pliée vers l'extérieur depuis une extrémité d'extension de l'échangeur de chaleur extérieur (55) et d'être raccordée à la partie de raccordement (223),
**caractérisé en ce que** des rainures verticales (23) espacées l'une de l'autre sont formées entre une surface extérieure de chaque surface de la paire de surfaces d'extension (22) et une surface extérieure du panneau extérieur (30) correspondant raccordé au support latéral (20), de manière à permettre à un utilisateur de mettre sa main dans les rainures verticales (23) quand le dispositif extérieur est transporté ou installé.

2. Dispositif extérieur selon la revendication 1, où la deuxième surface latérale (222) et la partie de raccordement (223) s' étendent sensiblement perpendiculairement l'une à l' autre.

3. Dispositif extérieur selon la revendication 1, où une première surface latérale (221) est pliée aux deux extrémités latérales de la surface inclinée (21), et coplanaire à la surface extérieure d'un panneau extérieur (30) respectif de la pluralité de panneaux extérieurs (30), et où la première surface latérale (221) forme une partie d'une surface périphérique du dispositif extérieur.

4. Dispositif extérieur selon l'une des revendications précédentes, où une distance entre une paire de parties pliées (221) s'étendant depuis les extrémités latérales respectives de la surface inclinée (21) est supérieure à une largeur latérale de la surface inclinée (21).

5. Dispositif extérieur selon l'une des revendications précédentes, où une largeur et une profondeur d'une ouverture de la rainure verticale (23) sont déterminées par un angle de pliage de la deuxième surface latérale (222) et une longueur d'extension de la deuxième surface latérale (222).

6. Dispositif extérieur selon l'une des revendications précédentes, où une périphérie du couvercle supérieur (10) est pliée et reçoit les extrémités supérieures de la pluralité de supports latéraux (20).

7. Dispositif extérieur selon la revendication 6, où une partie pliée (221) est prévue à une extrémité supérieure de la surface inclinée (21) pour supporter une surface inférieure du couvercle supérieur (10).

8. Dispositif extérieur selon l'une des revendications précédentes, où une pluralité d'orifices d'aspiration de support (212), ouverts le long de la surface inclinée (21) et refoulant de l'air extérieur vers l'échangeur de chaleur extérieur (55) est formée sur la surface inclinée (21) de chaque support (20).

9. Dispositif extérieur selon la revendication 8, où les orifices de la pluralité d'orifices d'aspiration de support (221) sont formés entre les orifices de la pluralité d'orifices d'aspiration (311, 331, 371) de la pluralité de panneaux extérieurs (30) prévus de part et d'autre du support (20) respectif.

10. Dispositif extérieur selon la revendication 9, où un orifice de la pluralité d'orifices d'aspiration de support (221) a une longueur identique à la longueur d'un orifice d'aspiration (311, 331, 371) placé à la même hauteur.

11. Dispositif extérieur selon la revendication 8, la revendication 9 ou la revendication 10, où la pluralité d'orifices d'aspiration de support (221) est formée dans une zone entre la plaque de base (40) et au moins un carénage (90) prévu au-dessus de l'échangeur de chaleur extérieur (55) pour guider le refoulement d'air.

12. Dispositif extérieur selon l'une des revendications 8 à 11, où la pluralité d'orifices d'aspiration de support (221) est formée dans chaque support de la pluralité de supports latéraux (20) prévus à un emplacement correspondant à un coin de pliage de l'échangeur de chaleur extérieur (55) parmi la pluralité de supports latéraux (20).
